# EUROPÄISCHE PATENTSCHRIFT

(11) **EP 1 061 271 B1**
(45) Veröffentlichungstag und Bekanntmachung des Hinweises auf die Patenterteilung: **17.03.2004**
(21) Anmeldenummer: 00110082.5
(22) Anmeldetag: 12.05.2000
(51) Int. Cl.: F16B 5/06, F16B 21/16, B60R 13/02, F16B 21/08, F16B 19/10

(54) **Verbindungselement aus Kunststoff**
Plastic connecting element
Elément de fixation en matière plastique

(30) Priorität: 18.05.1999 DE 29908703 U
(43) Veröffentlichungstag der Anmeldung: 20.12.2000
(73) Patentinhaber: TRW Automotive Electronics & Components GmbH & Co. KG, 78315 Radolfzell (DE)
(72) Erfinder: Kraus, Willibald, 67269 Grünstadt (DE)
(74) Vertreter: Schieschke, Klaus, Dipl.-Ing.

(56) Entgegenhaltungen:
- DE-U- 29 810 437
- FR-A- 2 214 348
- GB-A- 2 287 746
- US-A- 4 832 547
- US-A- 4 840 523

## Beschreibung

Die Erfindung bezieht sich auf ein Verbindungselement aus Kunststoff zwischen einem Träger, insbesondere einem Karosserieteil eines Kraftfahrzeugs, und einem Plattenelement, insbesondere einer Tür- oder Wandverkleidung, mit einem an dem Plattenelement befestigbaren Oberteil und mit einem mit dem Träger verbindbaren Unterteil mit Abschlusskegel, wobei das Unterteil mehrere, diagonal gegenüberliegende Längsrippen und eine zu dem Abschlusskegel führende, ballige Einschnürung aufweist, zwischen dem Oberteil und dem Unterteil ein mit Verrastungselementen versehener, halsförmig ausgebildeter Zwischenbereich vorgesehen ist, die Höhe der Längsrippen den Durchmesser des Zwischenbereichs übersteigt und die Längen des Zwischenbereichs des Unterteils in etwa gleich sind.

Als Stand der Technik ist bereits ein Verbindungsteil zwischen einem Träger, insbesondere einem Karosserieteil eines Kraftfahrzeugs, und einem Plattenelement bekannt, bei welchem das vorgenannte Verbindungselement Anwendung findet (DE-U-298 10 437). Bei dieser Verbindungseinheit ist ein in eine Trägeröffnung einlagerbares Eingriffsteil vorgesehen, welches von dem Zwischenbereich des Verbindungselements durchsetzt ist. Weiterhin ist der Zwischenbereich oberhalb des Trägers von einem Hülsenteil umgeben, welches mit Verrastungselementen des Verbindungselements und mit dem Eingriffsteil verriegelbar ist. Zwischen dem Hülsenteil und dem Eingriffsteil kann ein die Oberseite des Trägers beaufschlagendes Dichtelement vorgesehen sein.

Es können nun Toleranzschwankungen bezüglich der Position des Trägers oder dessen Trägerdicke auftreten, je nach Kraftfahrzeugtyp, nach ordnungsgemäßer Montage oder nach bestimmten Baubedingungen.

Das bekannte Verbindungselement ist hierbei nicht in der Lage, alle diese Anforderungen zu erfüllen, so dass entsprechend gestaltete Verbindungselemente vorrätig gehalten werden müssen, um je nach Kraftfahrzeugtyp und nach Erfordernissen der Praxis funktionsgerecht eingesetzt zu werden.

Entsprechend besteht die Aufgabe der vorliegenden Erfindung darin, ein Verbindungselement der vorgenannten Art zu schaffen, welches in der Lage ist, mit einer einzigen Konfiguration den in der Praxis ständig auftretenden Toleranzausgleich zu schaffen.

Diese Aufgabe wird erfindungsgemäß dadurch gelöst, dass die Längsrippen unterschiedliche Längen aufweisen. Hierdurch ergibt sich der Vorteil, dass auf einfache Weise ein guter Toleranzausgleich erzielt wird.

In weiterer Ausgestaltung der Erfindung können die Längsrippen zusätzlich unterschiedliche Höhen besitzen.

Die Erfindung wird nachfolgend an Hand von in der Zeichnung dargestellten Ausführungsbeispielen näher beschrieben. In der Zeichnung zeigen:
- Fig. 1: eine perspektivische Darstellung eines Verbindungselements
- Fig. 2: eine Seitenansicht des Verbindungselements nach Anspruch 1
- Fig. 3: eine perspektivische Darstellung des Verbindungselements nach Figur 1 und 2

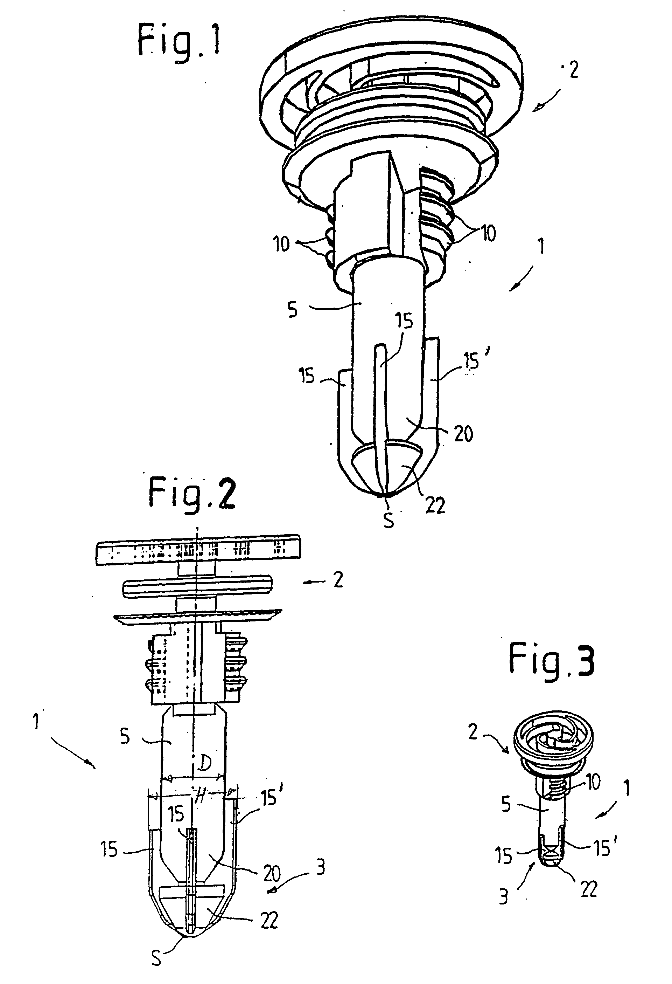

In Fig. 1 und 2 ist ein Verbindungselement 1 aus Kunststoff dargestellt, welches aus einem Oberteil 2, einem Unterteil 3 mit Abschlusskegel 22 und einem zwischen dem Oberteil 2 und dem Unterteil 3 vorgesehenen Zwischenbereich 5 besteht. Dieser Zwischenbereich 5 ist halsförmig ausgebildet und mit Verrastungselementen 10 versehen.

Das Oberteil 2 des Verbindungselements 1 ist an einem nicht näher dargestellten Plattenelement befestigbar, wobei dieses Plattenelement beispielsweise eine Tür- oder Wandverkleidung eines Kraftfahrzeuges sein kann.

Das Unterteil 3 kann an einem Träger, beispielsweise an einer Kraftfahrzeugkarosserie befestigt werden, wobei gemäß dem eingangs genannten Stand der Technik ein Hülsenteil, ein Dichtelement und ein Eingriffsteil Anwendung imden können.

Erfindungsgemäß weist das Unterteil 3 mehrere Längsrippen 15, 15' auf, deren Höhe H den Durchmesser D des Zwischenbereichs 5 übersteigen. Aus Fig. 1 und 2 ist darüber hinaus erkennbar, dass zwischen den Längsrippen 15, 15' eine an den Zwischenbereich 5 anschließende, zu dem Abschlusskegel 22 führende ballige Einschnürung 20 vorgesehen ist. Es können beispielsweise vier Längsrippen 15, 15' vorgesehen sein, welche sich einander diagonal gegenüber liegen. Diese Längsrippen 15, 15' können den Abschlusskegel 22 überragen und gewölbt zu dessen Spitze zulaufen. Durch die besondere Gestaltung dieser Längsrippen 15, 15' wird eine verbesserte Haltung an einem nicht näher dargestellten Träger erzielt, wobei die ballige Einschnürung 20, welche zu dem Abschlusskegel 22 führt, eine Erleichterung der Montage gewährleisten.

Gemäß dem in den Figuren 1 und 2 dargestellten Ausführungsbeispiel sind Längsrippen 15' vorgesehen, welche unterschiedliche Längen aufweisen. Hierbei kann einer Längsrippe 15 eine dimensionsmäßig größere Längsrippe 15' diagonal gegenüber stehen, wobei auch die Möglichkeit gegeben ist, dass jeweils zwei Längsrippen 15' sich diagonal gegenüber stehen, während die benachbarten Längsrippen 15 eine geringere Länge aufweisen.

Sowohl die Längsrippen 15 als auch die Längsrippen 15' können gleiche oder unterschiedliche Höhen besitzen.

Die Längen des Zwischenbereichs 5 und des Unterteils 3 sind in etwa gleich.

## Patentansprüche

1. Verbindungselement (1) aus Kunststoff zwischen einem Träger, insbesondere einem Karosserieteil eines Kraftfahrzeuges, und einem Plattenelement, insbesondere einer Tür- oder Wandverkleidung,
mit einem an dem Plattenelement befestigbaren Oberteil (2) und mit einem mit dem Träger verbindbaren Unterteil (3) mit Abschlusskegel (22), wobei das Unterteil (3) mehrere, diagonal gegenüber liegende Längsrippen (15, 15') und eine zu dem Abschlusskegel (22) führende, ballige Einschnürung (20) aufweist,
zwischen dem Oberteil (2) und dem Unterteil (3) ein mit Verrastungselementen (10) versehener, halsförmig ausgebildeter Zwischenbereich (5) vorgesehen ist, die Höhe (H) der Längsrippen (15, 15') den Durchmesser (D) des Zwischenbereichs (5) übersteigt und die Längen des Zwischenbereichs (5) und des Unterteils (3) in etwa gleich sind,
**dadurch gekennzeichnet,**
**dass** die Längsrippen (15') unterschiedliche Längen aufweisen.

2. Verbindungselement nach Anspruch 1, **dadurch gekennzeichnet, dass** die Längsrippen (15, 15') unterschiedliche Höhen (H) aufweisen.

## Claims

1. Plastic connecting element (1) between a support, in particular a body part of a motor vehicle, and a panel element, in particular a door or wall covering,
having an upper part (2) which can be fastened to the panel element and having a lower part (3) which can be connected to the support and has a conical end (22), the lower part (3) having a plurality of diagonally opposite longitudinal ribs (15, 15') and a spherical constriction (20) leading to the conical end (22),
an intermediate region (5) which is provided with latching elements (10) and is of neck-shaped design is provided between the upper part (2) and the lower part (3), the height (H) of the longitudinal ribs (15, 15') exceeds the diameter (D) of the intermediate region (5) and the length of the intermediate region (5) and of the lower part (3) are approximately the same,
**characterized**
**in that** the longitudinal ribs (15') differ in length.

2. Connecting element according to Claim 1, **characterized in that** the longitudinal ribs (15, 15') differ in height (H).

## Revendications

1. Elément d'assemblage (1) en matière synthétique entre un support, notamment une partie de carrosserie d'un véhicule automobile, et un élément de tôlerie, notamment un habillage de portière ou de paroi,
avec une partie supérieure (2) pouvant être fixée sur l'élément de tôlerie et avec une partie inférieure (3) munie d'un cône d'obturation (22), partie inférieure pouvant être assemblée sur le support, élément d'assemblage dans lequel la partie inférieure (3) présente plusieurs nervures longitudinales (15,15') situées de façon diagonalement opposée entre elles et un rétrécissement convexe (20) conduisant au cône d'obturation (22),
entre la partie supérieure (2) et la partie inférieure (3), il est prévu une zone intermédiaire (5) conçue en forme de col, munie d'éléments d'encliquetage (10), la hauteur (H) des nervures longitudinales (15, 15') dépasse le diamètre (D) de la zone intermédiaire (5) et les longueurs de la zone intermédiaire (5) et de la partie inférieure (3) sont approximativement égales entre elles,
**caractérisé en ce que,**
les nervures longitudinales (15') présentent des longueurs différentes entre elles.

2. Elément d'assemblage selon la revendication 1,
**caractérisé en ce que,**
les nervures longitudinales (15,15') présentent des hauteurs (H) différentes entre elles.
